# EUROPEAN PATENT APPLICATION

(11) **EP 1 543 731 A1**
(43) Date of publication of application: **22.06.2005**
(21) Application number: 03447291.0
(22) Date of filing: 16.12.2003
(51) Int. Cl.: A23K 1/18, A23K 1/16, A23K 1/00

(54) **Enrichment product for aquatic organisms comprising a gelled emulsion**

(71) Applicant: Inve Technologies N.V., 9200 Dendermonde (BE)
(72) Inventor: Dhert, Philippe, B-9550 Herzele (BE)
(74) Representative: Van Reet, Joseph

(57) **Abstract**

The product for the enrichment of aquatic organisms, in particular of filter feeding organisms like rotifers or *Artemia*, comprises at least 30% on total weight basis a lipid emulsion. The lipid emulsion consists for 25 to 80% by weight of an aqueous phase and for 20 to 75% by weight of a lipid phase dispersed in the aqueous phase. The enrichment product is in the form a water dispersible gelled body having a weight of at least 1 gram. Advantages of the gelled enrichment product is that it can be weighed and dosed more easily and that it can be taken up more efficiently so that higher levels of highly unsaturated fatty acids in *Artemia* nauplii can be reached and/or so that enrichment of *Artemia* nauplii is feasible at higher densities, in particular higher than 350 nauplii per ml, whilst still achieving the required enrichment levels.

## Description

The present invention relates to an enrichment product for aquatic organisms, in particular for filter feeding organisms such as *Artemia* or rotifers, comprising a lipid emulsion consisting for 25 to 80% by weight of an aqueous phase and for 20 to 75% by weight of a lipid phase, which lipid phase contains lipids and is dispersed in the aqueous phase.

*Artemia* nauplii are the most widely used live prey species for larviculture primarily because they are very convenient to use and are readily available. However, it has long been recognised that *Artemia* nauplii are an incomplete food source for many larvae because of their paucity of essential n-3 highly unsaturated fatty acids (i.e. C₂₀ fatty acids or higher containing at least three unsaturated bonds). Many efforts have been invested in increasing the level of n-3 highly unsaturated fatty acids (HUFA) and the ratio docosahexaenoic acid : eicosapentaenoic acid (DHA:EPA) in *Artemia* nauplii and other live prey organisms by enriching (also called: "bio-encapsulation" or "boosting") them with algae, microparticles, yeast based diets, micro-encapsulated diets or marine oil emulsions. Highest enrichment levels are obtained when using emulsified concentrates (Merchie, G. 1996. Use of nauplii and metanauplii: 137-163. In: Manual on the production and use of life food for aquaculture. Lavens, P. and Sorgeloos, P (Eds)). The success and the convenience of the latter diet has led to commercially produced n-3 HUFA liquid enrichment emulsions (like "SELCO", registered product of INVE) appearing on the market and these are now widely used in marine hatcheries.

Notwithstanding the commercial success of the liquid emulsions as enrichment product for *Artemia,* there are some drawbacks in using liquid oily concentrates in marine hatcheries.

First of all it is difficult to distribute the emulsion in recipients due to the oily nature with low viscosity. The emulsion sticks to the distributing devices resulting in a considerable loss. Moreover, for the end-user, it is difficult to empty the whole recipient. A certain part of the emulsion will stick to the recipient's walls and thus will not be available for use. Furthermore, it is important for the enrichment of filterfeeders to feed them with certain accurate amounts of emulsion per volume. Weighing the emulsion on a precise balance is a difficult and labour asking job. When too much of the emulsion is pored out off the recipient, it can not be returned since the pored out emulsion has been exposed to oxygen. For the same reason, of each recipient containing lipid emulsion that has been opened, the entered oxygen is preferably to be taken out (for instance by adding N₂) to avoid oxidation of the remaining lipid emulsion in the recipient.

Prior to feeding, the emulsion concentrate is preferably mixed up with water by means of a kitchen blender and this for at least 3 minutes continuously mixing. Then, the emulsion is administered in consecutive portions at certain time intervals. This procedure is labour intensive and practically not always applied in a proper way. Small alterations in this procedure may result in different enrichment results in the *Artemia* nauplii, even when the procedure is applied by only one person all the time (Lavens, P.; Coutteau, P.; Sorgeloos, P. 1995. Laboratory and field variation in HUFA enrichment of *Artemia* nauplii: 137-140. In: Larvi'95. Lavens, P., Jaspers, E., Roelants, I. (Eds). European Aquaculture Society, Spec. Publ. No 24, Gent, Belgium, 521 pp).

Another drawback is that the density of the *Artemia* nauplii in the enrichment medium containing the enrichment product is limited. If the density of the *Artemia* nauplii could be increased, it would be possible to enrich more nauplii in a same tank volume. In standard enrichment procedures with the so far used lipid emulsions, densities of *Artemia* Instar I nauplii of not more than 200 or 300 /ml are commonly used. For higher densities, there is an increased risk of failure of the culture due to a shortage of oxygen in the enrichment medium. Indeed, a sudden drop of the oxygen level in the enrichment medium can be observed when adding the enrichment emulsion thereto. The oxygen shortage may be attributed to the additional oxygen consumption as a result of oxidation of the lipids in the enrichment product and the development of bacteria in the enrichment medium.

In practice higher densities are moreover also not used in view of the fact that, even if the enrichment is carried out under optimal conditions so that the risk of failure is reduced, such higher densities would result in a lower enrichment level of the nauplii. Increasing the enrichment level by adding more enrichment product is normally not possible since too high amounts of this product in the medium have a negative effect on the nauplii. The enrichment product does not only cause a reduction of the oxygen level in the enrichment medium but the quality of the enrichment medium is reduced. The lipids may for example start to accumulate onto the nauplii, in particular onto to the gills, thus causing a worse development or even death of the nauplii.

A final drawback of the known liquid emulsions is that when particulate materials (additives) such as pigments are added thereto, these materials sink to the bottom of the recipient during storage of the product and when the liquefied emulsion is not shaken well before use, those important additives mainly stick to the bottom and are not or to a less instant utilised together with the oil emulsion.

An object to the present invention is therefore to provide a new enrichment product for aquatic organisms, which can more easily be handled, weighed and dosed in the enrichment medium, wherein optionally present particulate additives do not settle or at least less quickly than in liquid emulsions, and which enrichment product enable higher densities of the aquatic organisms in the enrichment medium and/or higher enrichment levels for a same density of aquatic organisms.

To this end, the enrichment product according to the invention is characterised in that it consists for at least 30% by weight, and preferably for at least 50% by weight, of the lipid emulsion and the aqueous phase of the emulsion contains at least one gelling agent so that the aqueous phase is in the form of a water soluble or dispersible gel and the enrichment product in the form of a gelled body, which gelled body has a weight of at least 1 gram.

According to the invention, it has been found quite surprisingly that by adding a gelling agent the liquid emulsions of the prior art could be transformed into a gelled body, which is usually kneadable, and that in this way, a number of longstanding problems observed with the prior art liquid enrichment emulsions are solved.

The enrichment product according to the invention is easy to handle, does not stick to wrapping material or containers, can be easily weighed and does not need to be premixed in water before adding it to the culture tanks. Moreover, not only water soluble but also particulate additives can be included easily homogeneously into the enrichment product without causing any precipitation during storage.

Surprisingly, as a result of the fact that the lipid emulsion is in the form of a gelled body, higher enrichment levels of highly unsaturated fatty acids could be obtained in *Artemia* nauplii, for a same amount of enrichment product and a same density, compared to *Artemia* enriched with the known liquid emulsions that are not gelled. Moreover, enrichment of *Artemia* with the enrichment product according to the present invention allows higher densities, up to more than 350 nauplii per ml till more than 500 nauplii per ml whilst still obtaining the required enrichment level. The enrichment product according to the invention can thus be more effectively used than the known liquid enrichment emulsions.

The advantageous effects of the solid enrichment product according to the invention may be explained by the fact that as soon as it is introduced in the enrichment medium, the lipid globules are slowly released in the medium and can be taken up easily by the aquatic organisms. Since less organic material is thus available in the enrichment medium, the development of oxygen consuming bacteria is less pronounced in the medium. Moreover, in the gelled body, the unsaturated lipids are less subjected to oxidation so that the oxygen in the enrichment medium is also less consumed in this way. Consequently, more oxygen remains available for the aquatic organisms thus enabling higher densities. Since the lipid globules released in the medium are more effectively taken up by the filter feeding organisms, a smaller amount thereof is lost for example by the formation of an oil film on the medium or by sticking to the walls of the tank.

Another advantage of the product according to the invention is that the unsaturated lipids present therein are less prone to oxidation than in the liquid emulsions. Especially highly unsaturated fatty acids, which are the most important nutrients for the enrichment, are oxidised very easily as soon as the emulsion comes into contact with air. More importantly, the enrichment procedure itself usually includes a combination of vigorous aeration, illumination and temperatures of approximately 27°C, all of which tend to accelerate autoxidation of highly unsaturated fatty acids and the formation of potentially toxic, oxidation products. This may cause a reduced enrichment level of highly unsaturated fatty acids in *Artemia* nauplii. Moreover, there is an additional hazard that in later stages of enrichment, *Artemia* could be feeding on lipid peroxides and other potentially toxic oxidation products which would then be passed to the fish and crustacean larvae.

In a preferred embodiment of the enrichment product according to the invention the emulsion comprises at least 30% by weight, preferably at least 45% by weight and more preferably at least 55% by weight of said lipids. The lipids more preferably contain fatty acids, at least 20% by weight of which are (n-3) highly unsaturated fatty acids containing more than two double bonds and having a chain length of at least twenty carbon atoms.

Such enrichment products with high amounts of HUFA's only need to be used in relatively small amounts to achieve an effective enrichment of the aquatic organisms. Notwithstanding the relatively high lipid content, it has been found that the liquid emulsion could be transformed into a gelled body by the use of one or more gelling agents.

In a further preferred embodiment of the enrichment product according to the invention, the gelled body comprises at least one anti-microbial agent, in particular an anti-microbial agent dissolved in the aqueous phase.

An advantage of this embodiment is that the enrichment product enables to assure concentrations of the disinfecting agent in the enrichment medium which are non-lethal for the aquatic organisms but which are at the same time sufficient to reduce the bacterial load in the enrichment medium.

Advantageously, the gelled body has a weight of at least 10 g, preferably at least 50 g, more preferably at least 100 g and most preferably at least 200 g. In general, the larger the gelled body, the longer the enrichment product particles and the optional anti-microbial agent and/or probiotic micro-organisms are released.

The present invention also relates to a method to culture fish or crustaceans wherein live prey aquatic organisms, in particular marine filter feeding organisms such as *Artemia* and/or rotifers, are enriched in an enrichment medium with an enrichment product, comprising a lipid emulsion consisting for 25 to 80% by weight of an aqueous phase and for 20 to 75% by weight of a lipid phase, before being fed in a culture medium to larvae of the fish or crustaceans, characterised in that the live prey aquatic organisms are enriched with an enrichment product according to the invention. The advantages obtained by this method can be deduced from the advantages set forth hereabove for the enrichment product and include less labour for enrichment of the prey organisms, a possible higher production capacity of the enrichment tanks, a possible higher enrichment level of the prey organisms and a more efficient use of the enrichment product. Consequently, the method according to the invention requires less labour, less or smaller capital outlay for enrichment installations and less costs for enrichment products.

Other particularities and advantages of the invention will become apparent from the following more detailed description of the particular embodiments of the enrichment product and the culture method according to the present invention.

The enrichment product according to the invention is intended to enrich aquatic organisms, in particular filter feeding organisms like rotifers, *Artemia* nauplii and bivalves, with lipids and more particularly with lipids comprising relatively high levels of highly unsaturated fatty acids (HUFA's). Rotifers and *Artemia* nauplii don't need the lipids for themselves but are used to transfer the lipids to the predator organisms (fish or shrimp larvae). In order to enable the aquatic organisms to take up the lipids in the enrichment medium, the lipids are contained in a lipid emulsion, more particularly in an oil in water emulsion which, when added to the enrichment medium provide lipid (oil) globules, more than 90% of which measure between 1 and 10 µm.

In the enrichment product according to the invention, the lipid emulsion consists for 25 to 80% by weight of an aqueous phase and for 20 to 75% by weight of a lipid phase which is dispersed in the continuous aqueous phase. In contrast to the prior art liquid emulsions, the aqueous phase contains at least one gelling agent so that the aqueous phase is in the form of a water dispersible gel and the enrichment product in the form of a gelled body. This gelled body may show different consistencies varying from a kneadable material to a rather rigid body. An advantage of an enrichment product in the form of a gelled body is that, in contrast to the liquid emulsions, it can be formulated so that it does not stick to the packaging, it can be weighed more easily or cut easily into several parts and does not need to be premixed with water but can be administered as such to the enrichment medium.

The gelled emulsion preferably comprises at least 30% by weight, preferably at least 45% by weight and more preferably at least 55% by weight of lipids. Although lower amounts of lipids are possible, for example amounts as low as 20% by weight, higher amounts are preferred in order to achieve a stronger enrichment of the aquatic organisms. Since especially enrichment with HUFA's is desired, the lipids preferably contain fatty acids, at least 20% by weight of which are (n-3) highly unsaturated fatty acids.

In addition to the lipid emulsion, the enrichment product according to the invention can comprise solid particles which are not dissolved in the aqueous or in the lipid phase of the emulsion and which have a size smaller than 500 µm. According to the invention, the enrichment product consists however for at least 30% by weight, and preferably for at least 50% by weight, of the emulsion so that it contains at the most 70% by weight of solid particles having a particle size smaller than 500 µm. In this way, the gelled emulsion can provide a sufficiently coherent matrix wherein the particles of the particulate material are, preferably homogeneously, embedded and the enrichment product can moreover contain a relatively high amount of lipids. Preferably, the enrichment product consists for at least 60% by weight, more preferably for at least 70% by weight and most preferably for at least 80% by weight of the lipid emulsion.

The enrichment product, more particularly the lipid emulsion thereof, can also comprise substances or compounds which are dissolved in the aqueous or in the lipid phase of the emulsion. In contrast to the solid, undissolved particulate materials, these dissolved substances or compounds are comprised in the weight of the emulsion, and more particularly in the weight of the aqueous phase thereof when they are dissolved in the aqueous phase, or in the weight of the lipid phase when they are dissolved in the lipid phase.

The gelled body of the enrichment product according to the invention may have any arbitrary shape but is preferably spherical or cylindrical for practical use. It has a weight of at least 1 g, and preferably of at least 10 g. Since the enrichment tanks of marine organisms in commercial hatcheries often are of the size of 100 I or more, the total weight of the gelled body, before being introduced in the culture medium, is preferably higher than 50 g, more preferably higher than 100 g and most preferably higher than 200 g.

When the enrichment product according to the invention is introduced in the aqueous enrichment medium, the gel in the lipid emulsion dissolves or disperses rather slowly so that the lipid (oil) globules are released. Compared to the existing lipid emulsions, the globules are released more slowly. The release rate cannot only be controlled by the formulation of the gel but also by the size and the shape of the gelled body or bodies. The release rate can for example be easily increased by using, instead of one gelled body of a predetermined weight, more gelled bodies which have a same total weight but which are each of a smaller size. An advantage of the gelled body is in this respect that it can easily be divided (cut) into smaller pieces. On the other hand, when the gelled bodies are kneadable, it is possible to knead two or more gelled bodies to one larger body. The optimum size of the gelled body or bodies added to the enrichment tank can thus easily be determined experimentally by the skilled person.

An important advantage of the enrichment product according to the invention is that the released globules from the gelled emulsion are continuously taken up by the prey organisms. In this way the emulsion is more effectively taken up by the organisms and less product is lost. The lipids are more particularly less subjected to oxidation and are not, or to a less extend, allowed to adhere to the walls or to form a film (so that they can no longer be taken up by the filter feeding organisms).

Experiments have demonstrated that higher enrichment levels in *Artemia* can be obtained with the enrichment product according to the invention compared to a liquefied oil emulsion containing the same amount of emulsion. Moreover, the filter feeding organisms can be enriched in a higher density. Standard enrichment procedures with lipid emulsions require densities of *Artemia* nauplii Instar I of not more than 200 or 300 / ml. Densities higher than 300 / ml are mostly not possible due to lack of oxygen during and the formation of toxic oxidation products during the enrichment procedure. Enrichment of *Artemia* with the enrichment product according to the present invention, in which the lipid globules are slowly released, allows higher densities, up to more than 350 nauplii per ml, preferably more than 400 nauplii per ml and most preferably more than 450 nauplii per ml.

For producing the enrichment product according to the invention use can be made of the commercially available lipid emulsions for the enrichment of marine filter feeding aquaculture organisms Examples of suitable oil emulsions all the "Selco" - type (registered product by INVE) oil emulsions for enrichment of *Artemia* nauplii. Other commercially available oil emulsions are suitable as well. Such oil emulsions contain emulsifiers which are therefore also present in the enrichment product according to the invention, more particularly in such an amount that a stable emulsion is obtained.

*Artemia* are usually enriched with lipids comprising highly unsaturated fatty acids before they are fed as live prey organisms to larval fish or shrimp. In the gelled body of the present invention, globules of lipids, preferably those with higher than 20% of the total lipid content of highly unsaturated fatty acids like EPA and DHA, are used.

In a preferred embodiment, the gelling agent comprises a gum, belonging to a large family of water soluble celluloses (C₆H₁₀O₅)ₙ like: methylcellulose, ethylcellulose, hydroxypropylcellulose, hydroxypropylmethylcellulose (HPMC), methylethylcellulose, carboxymethylcellulose (CMC) etc. The gelling agent comprises preferably between 1 and 10% by weight of the total weight of the enrichment product. The thus obtained gelled emulsion has a good constitution which allows above mentioned characteristics with respect to preventing sticking to the recipients, easy handling and so on. Inclusion of more than 1% and less than 10% CMC of the gelled emulsion gives a good constitution to the gelled enrichment product but with HPMC the gelled product becomes more elastic and rolls in the hands without sticking to the hands or to the recipients. Different hydrocolloids and/or binders can improve the elasticity and the consistency and/or the release features of the enrichment product according to the invention.

As set forth here above, particulate additives can be easily incorporated in the gelled body or bodies of the enrichment product according to the invention. The incorporation of particulate additives in diets often causes problems regarding the deposit of these additives in the diet itself, mainly when the diets are liquid, which is often the case for live food organisms. When diets with deposited additives are administered to the prey organisms, unbalanced portions are introduced in the water. Incorporation of the particulate additives in a gelled diet according to the invention, wherein the particulate material is distributed in the matrix formed by the gelled lipid emulsion, prevents deposit of the particles in the diet. Examples of commonly used particulate additives that normally deposit easily in diets, and which comprise particles smaller than 500 µm, are: micro-algal cells or cell fragments, probiotic micro-organisms, pigments (astaxanthine, canthaxanthine...), vitamins (Vitamin B12...) and attractants.

In a preferred embodiment, the gelled body contains more than 1 %, preferably more than 2% and more preferably more than 5% by weight dry matter algal cells and/or fragments on total weight basis. These cells and/or cell fragments are distributed in the matrix formed by the gelled lipid emulsion. The inclusion of algal material makes the lipid diet more attractive for the prey organisms. Partly dried algal diets are difficult to be fed to prey organisms since they settle out easily on the bottom of the tank or clump together. When the algal cells and / or fragments are added to the gelled diet, they will not clump or sediment on the bottom of the tank.

In a further preferred embodiment of the enrichment product according to the invention, the gelled body comprises probiotic micro-organisms. Meant under probiotic micro-organisms are certain micro-organisms (live or dead bacteria, yeasts...) that can be actively added to the enrichment product in order to achieve beneficial effects for the prey organisms or the predator (e.g.: enhanced digestibility, improved immune system) or that can replace at least partially the existing bacterial population present in the prey organism, the predator or in the surrounding medium mostly to prevent diseases. Examples of probiotic micro-organisms are (but not limited to): *Lactobacillus* strains, *Enterococcus* strains, *Bacillus* strains, *Pediococcus* strains, *Saccharomyces* strains etc). Minimum amounts of probiotic micro-organisms to have any beneficial effect are 10⁷ cells per gram enrichment product (in case of dead bacteria or spores) or 10⁷ colony forming units per gram enrichment product in case of live bacteria and 10⁷ cells per gram enrichment product in case of yeast. Total amount of probiotic micro-organisms is normally less than 1% of the enrichment product on weight basis.

Usually it is important that certain agents in the enrichment of marine organisms are administered in low quantities at several times to avoid overdoses or settlement and pollution of the additives in the enrichment tank. When incorporated in the gelled enrichment product, together with the lipid emulsion, those agents will be slowly released at the same speed as the oil droplets or at a similar speed. In this way, the distribution of the agents can be better controlled. In the enrichment product according to the invention, anti-microbial agents can be incorporated in the gelled body or bodies to control the hygienic properties of the enrichment medium. It is important to introduce these anti-microbialagents in predetermined quantities within determined ranges in the enrichment medium. A concentration that is too low will have no effect on the microbial community of the enrichment medium. On the other hand, too high concentrations will adversely affect the aquatic organisms (bivalves, *Artemia* etc). Initial concentrations of the disinfecting agent, incorporated in live feed diets is normally too high because of the gradual break down of the anti-microbial agent during the culture or enrichment of bivalves or Artemia. The initial concentration of the incorporated anti-microbial agent in the enrichment product according to the invention will be lower because it will only be partly released when introduced in water. The gelled body will continue to release the further agents in small amounts, distributed over a certain period. This way, the distribution of the anti-microbial agents is better controlled in the enrichment medium and since lower, but more constant concentrations will be available in the culture tank, more different types of anti-microbial agents can be administered for those particular applications.

The gelled enrichment product according to the invention can be introduced as such in the enrichment medium. However, in order to modify for example the flotation characteristics of the product, it can be used in combination with a carrier or support material. The enrichment product may for example be arranged around one or more relatively large core pieces of a light material such as polystyrene. It is also possible to embed smaller particles in the enrichment product, for example heavier particles in order to make the enrichment product sink to the bottom of the tank. When these particles have a size larger than 500 µm, they are not to be considered as a component of the enrichment product, in contrast to the particles described hereabove having a size smaller than 500 µm.

Most important filter feeding organisms which can be enriched with the enrichment product according to the present invention are *Artemia* nauplii, since those species are worldwide used live prey organisms for shrimp and fish larvae. However, also non-prey filter feeding organisms such as bivalves can be enriched with the enrichment product according to the invention.

Since the filter feeding prey organism are cultured and enriched in the marine hatcheries during the culture of fish and also crustacean like shrimp, the invention also relates to the culture of such fish or crustacean wherein the live prey organisms are enriched with an enrichment product according to the invention before being fed to the fish or crustacean.

In the following examples all percentages are expressed as weight percentages and are calculated on the final wet weight.

### Example 1

DHA Selco™: 90%
Gelling agent (HPMC): 4%
Vitamins (oil soluble): 3%
Non-soluble silica powder (flowing agent): 3%

Mix the DHA Selco™ lipid emulsion (containing about 69% lipid phase and 31% aqueous phase) with the vitamins. Add the gelling agent and mix well. Let the mixture stand for 5 minutes so that the gelling agent has time to bind the water of the lipid emulsion. Then mix again shortly. Add the flowing agent so that the product can easily come out of the container.

Preserve the obtained product in air-tight bags, preferably under vacuum. The emulsion in the obtained enrichment product comprises about 32% gel (including the water in the emulsion and the gelling agent) and about 65% lipids on total weight basis (including the lipids of the emulsion and the vitamins dissolved therein).

The diet does not stick to the hands or to the packaging. It can be easily weighed and can be introduced as such to the culture medium.

Table 1 shows the different enrichment levels of docosahexaenoic acid (DHA), the total (n-3) highly unsaturated fatty acids (n-3 HUFA) and the ratio DHA over EPA in *Artemia* nauplii enriched with the liquid oil emulsion (DHA Selco Stable) and the gelled emulsion prepared as in example 1.

**Table 1:**

| Enrichment levels in *Artemia* enriched with the emulsion compared to the corresponding gel. | | | | |
|---|---|---|---|---|
| Density 500 nauplii/ml | 12 hours after inoculation T12 | | 24 hours after inoculation T24 | |
| | Emulsion | Gel | Emulsion | Gel |
| n-3 HUFA (mg/g DW) | 24 | **40** | 41 | **56** |
| DHA (mg/g DW) | **11** | **24** | 23 | **35** |
| DHA/EPA | 1.2 | **1.8** | 1.5 | **1.9** |

Enrichment was performed in cylindrical conical tanks with 90 I water with a salinity of 35 ppt and a temperature of 28°C. The pH was controlled at 7.5. Stocking density was 500 nauplii per ml. The enrichment product was added at the start of the enrichment and 12 hours later in 2 portions of 300 mg enrichment product per I. Samples of *Artemia* nauplii to analyse the levels of the HUFA were taken 12 hours after the start of enrichment (T12) and at the end of the enrichment, thus 24 hours after the start of enrichment (T24).

**Table 2:**

| Enrichment levels in *Artemia* enriched in different densities (300 and 500 Artemia nauplii / ml). | | | | |
|---|---|---|---|---|
| Density | 300 *Artemia* nauplii / ml | | 500 *Artemia* nauplii / ml | |
| | Emulsion | Gel | Emulsion | Gel |
| n-3 HUFA (mg/g DW) | 58 | 76 | 41 | **56** |
| DHA (mg/g DW) | 35 | **42** | 23 | **35** |
| DHA / EPA | 1.9 | **2.2** | 1.5 | **1.9** |

Table 2 gives the enrichment levels in *Artemia* nauplii, enriched with the emulsion compared to the corresponding gelled emulsion. *Artemia* nauplii were enriched in normal densities (300/ml) and in high densities (500/ml). Higher enrichment levels are obtained with the gel compared to the emulsion (containing same quality and quantity of lipids) when enrichment is done at the same density. In higher densities, lower enrichment levels are obtained (less enrichment product for more *Artemia* nauplii), but the gelled enrichment product is better utilised compared to the emulsion diet. When the gelled diet according to the invention is fed to the *Artemia* nauplii at high densities (500 nauplii / ml), similar enrichment levels in *Artemia* nauplli are reached as when the standard emulsion diet is fed to *Artemia* nauplil in low densities (300 nauplii / ml). Thus, more *Artemia* nauplii can be enriched with the same enrichment levels when the gel is used.

### Example 2

DHA Selco™ : 90%
Gelling agent (HPMC): 5%
Vitamines (oil soluble): 1%
Chlorella algae: 3%
Non-soluble silica powder (flowing agent): 1%

Mix the DHA Selco™ lipid emulsion (containing about 69% lipid phase and 31% aqueous phase) with the vitamins and the dried Chlorella algae. Add the gelling agent and mix well. Let the mixture stand for 5 minutes so that the gelling agent has time to bind the water of the lipid emulsion. Then mix again shortly. Add the flowing agent so that the product can easily come out of the container.

Preserve the obtained product in air-tight bags, preferably under vacuum. The obtained enrichment product comprises about 33% gel (including the water in the oil emulsion and the gelling agent) and about 63% lipids (including the lipids of the lipid emulsion and the vitamins dissolved therein) on total weight basis.

The diet does not stick to the hands or to the packaging. It is easily weighed and can be introduced as such to the culture medium.

### Example 3

Super Selco™: 88.7%
Gelling agent (HPMC): 3.5%
Haematococcus: 3.3%
Non-soluble silica powder (flowing agent): 2.5%
Anti-microbial agents (water-soluble): 2%

Mix the Super Selco™ emulsion (containing about 67% lipid phase and 33% aqueous phase) with the *Haematococcus* algae and the anti-microbial agents. Add the gelling agent and mix well. Let the mixture stand for 5 minutes so that the gelling agent has time to bind the water of the lipid emulsion. Then mix again shortly. Add the flowing agent so that the product can easily come out of the container.

Preserve the obtained product in air-tight bags, preferably under vacuum. The obtained enrichment product comprises about 34.5% gel (including the water of the emulsion, the water soluble anti-microbial agents and the gelling agent) and about 59.70% lipids on total weight basis.

The diet does not stick to the hands nor to the packaging. It is easily weighed and can be introduced as such to the culture medium.

### Example 4

Super Selco™: 35%
Gelling agent (HPMC) : 8%
Water: 54%
Non-soluble silica powder (flowing agent): 3%

Dilute the Super Selco™ emulsion (containing 67% oil and 33% aqueous phase) with water and mix well till a new emulsion appears. Add the gelling agent and mix well. Let the mixture stand for 5 minutes so that the gelling agent has time to bind the water of the emulsion. Then mix again shortly. Add the flowing agent so that the product can easily come out of the container.

Preserve the obtained product in air-tight bags, preferably under vacuum. The obtained enrichment product comprises about 73.5% gel (including the added water, the water of the oil emulsion and the binder) and about 23.5% lipids on total weight basis.

The diet does not stick to the hands nor to the packaging. It is easily weighed and can be introduced as such to the culture medium.

### Example 5

DHA Selco™: 90%
Gelling agent (HPMC) : 5%
Amino acids: 4%
Non-soluble silica powder (flowing agent): 1%

Mix the DHA Selco™ emulsion (containing 69% oil phase and 31% aqueous phase) with the amino acids. Add the gelling agent and mix well. Let the mixture stand for 5 minutes so that the gelling agent has time to bind the water in the emulsion. Then mix again shortly. Add the flowing agent so that the product can easily come out of the container.

Preserve the obtained product in air-tight bags, preferably under vacuum. The obtained enrichment product comprises about 33% gel (including the water of the oil emulsion and the binder) and about 66% lipids (including the lipids of the emulsion and the amino acids dissolved in the lipid phase) on total weight basis.

The diet does not stick to the hands nor to the packaging. It is easily weighed and can be introduced as such to the culture medium.

## Claims

1. Enrichment product for aquatic organisms, in particular for filter feeding organisms such as *Artemia* or rotifers, comprising a lipid emulsion consisting for 25 to 80% by weight of an aqueous phase and for 20 to 75% by weight of a lipid phase, which lipid phase contains lipids and is dispersed in the aqueous phase, **characterised in that** the enrichment product consists for at least 30% by weight, and preferably for at least 50% by weight, of said emulsion and the aqueous phase of said emulsion contains at least one gelling agent so that the aqueous phase is in the form of a water soluble or dispersible gel and the enrichment product in the form of a gelled body, which gelled body has a weight of at least 1 gram.

2. Enrichment product according to claim 1, **characterised in that** said emulsion comprises at least 30% by weight, preferably at least 45% by weight and more preferably at least 55% by weight of said lipids.

3. Enrichment product according to claim 1 to 2, **characterised in that** it consists for at least 60% by weight, preferably for at least 70% by weight and more preferably for at least 80% by weight of said lipid emulsion.

4. Enrichment product according to any one of the claims 1 to 3, **characterised in that** said lipids comprise fatty acids, at least 20% by weight of which are (n-3) highly unsaturated fatty acids containing more than two double bonds and having a chain length of at least twenty carbon atoms.

5. Enrichment product according to any one of the claims 1 to 4, **characterised in that** said gelled body has a weight of at least 10 g, preferably at least 50 g, more preferably at least 100 g and most preferably at least 200 g.

6. Enrichment product according to any one of the claims 1 to 5, **characterised in that** said gelling agent is present in the lipid emulsion in an amount of between 1 and 10% by weight of the enrichment product, and comprises preferably a food gum, in particular CMC and/or HPMC, and more preferably HPMC

7. Enrichment product according to any one of the claims 1 to 6, **characterised in that** it comprises, in addition to said lipid emulsion, solid particles which are distributed in a matrix formed by the lipid emulsion and which have a size smaller than 500 µm, the solid particles being preferably substantially homogeneously distributed in the lipid emulsion matrix.

8. Enrichment product according to any one of the claims 1 to 7, **characterised in that** it contains, in addition to said lipid emulsion, more than 1% by weight, preferably more than 2% by weight, and more preferably more than 5% by weight dry matter algal cells and/or algal fragments which are distributed in a matrix formed by the lipid emulsion, the algal cells and/or algal fragments being preferably substantially homogeneously distributed in the lipid emulsion matrix.

9. Enrichment product according to any one of the claims 1 to 8, **characterised in that** it comprises at least one anti-microbial agent, in particular an anti-microbial agent dissolved in the aqueous phase of the emulsion.

10. Enrichment product according to any one of the claims 1 to 9, **characterised in that** it comprises at least one probiotic micro-organism, the probiotic micro-organism being present in an amount of at least 10⁷ colony forming units per gram enrichment product if the probiotic micro-organism is a living micro-organism, or in an amount of at least 10⁷ cells per gram enrichment product if the probiotic micro-organism is a dead micro-organism and/or a yeast.

11. Method to culture fish or crustaceans, in particular shrimp, wherein live prey aquatic organisms, in particular filter feeding organisms such as *Artemia* and/or rotifers, are enriched in an enrichment medium with an enrichment product before being fed in a culture medium to larvae of the fish or crustaceans, the enrichment product comprising a lipid emulsion consisting for 25 to 80% by weight of an aqueous phase and for 20 to 75% by weight of a lipid phase, **characterised in that** the live prey aquatic organisms are enriched with an enrichment product according to any one of the claims 1 to 10.

12. Method according to claims 11 **characterised in that** the enrichment product comprises at least one disinfecting agent in such an amount as to negatively affect growth of harmful micro-organisms in said enrichment medium.

13. Method according to claims 11 or 12, **characterised in that** the live prey aquatic organisms are *Artemia* nauplii, which are enriched in an enrichment medium in a density of more than 350 nauplii per ml, preferably of more than 400 nauplii per ml and most preferably of more than 450 nauplii per ml enrichment medium.
